# EUROPEAN PATENT SPECIFICATION

(11) **EP 1 398 543 B1**
(45) Date of publication and mention of the grant of the patent: **16.11.2005**
(21) Application number: 03018327.1
(22) Date of filing: 12.08.2003
(51) Int. Cl.: F16H 57/02

(54) **Vibration-proof structure for a gear transmission device**
Schwingungsdämpfende Struktur für eine Getriebevorrichtung
Structure anti-vibrations pour un dispositif de transmission à engrenages

(30) Priority: 11.09.2002 JP 2002265194
(43) Date of publication of application: 17.03.2004
(73) Proprietor: HONDA GIKEN KOGYO KABUSHIKI KAISHA, Minato-ku, Tokyo (JP)
(72) Inventor: Nakamura, Kenichiro, 4-1 Chuo 1-chome, Wako-shi, Saitama-ken (JP); Fujikawa, Satoshi, 4-1 Chuo 1-chome, Wako-shi, Saitama-ken (JP); Sonobata, Akira, 4-1 Chuo 1-chome, Wako-shi, Saitama-ken (JP); Iwai, Shunsuke, 4-1 Chuo 1-chome, Wako-shi, Saitama-ken (JP)
(74) Representative: Liska, Horst

(56) References cited:
- EP-A- 0 541 023
- WO-A-02/44591
- DE-A- 3 708 100

## Description

The present invention relates to the improvement of a vibration-proof structure for a gear transmission device, the improvement comprising interposing an elastic member for pressing a gear of the gear transmission device which can move in an axial direction between opposed first and second fixed walls toward the first fixed wall between the gear and the second fixed wall of a gear transmission device so that the vibration of the gear is absorbed by the buffer function of this elastic member.

The vibration-proof structure of the above gear transmission device has already been known as disclosed by Patent Document 1.
Patent Document 1:
   Japanese Utility Model Laid Open No. 57-171420
Patent Document 2:
   Japanese Utility Model Laid Open No. 5-79095

In the vibration-proof structure of a conventional gear transmission device of the prior art, an elastic member is interposed between a gear and a second fixed wall simply by applying a predetermined set load. The inventors of the present invention have found that when a large thrust load toward the second fixed wall is applied to the gear during operation, the elastic member may bend excessively and the resiliency of the elastic member becomes excessive in this case, thereby amplifying the vibration of the gear and impairing the service life of the elastic member.

A gear transmission device according to the preamble of claim 1 is known from WO 02/44591.

It is an object of the present invention which has been made in view of the above situation to provide a vibration-proof structure for the above gear transmission device, which restrains the excessive bending of an elastic member when a gear vibrates so that the elastic member can always exhibit a normal buffer function and the durability of the elastic member can be improved.

This object is achieved by a gear transmission device according to claim 1.

A first aspect of the present invention is that in a vibration-proof structure for a gear transmission device in which an elastic member for pressing a gear of a gear transmission device which can move in an axial direction between opposed first and second fixed walls toward the first fixed wall side is interposed between the gear and the second fixed wall of the gear transmission device, regulating means for regulating an increase of a predetermined value or more in the bending amount of the elastic member is interposed between the gear and the second fixed wall.

The above gear transmission device corresponds to a starting gear transmission device 15 in Examples of the present invention which will be described hereinafter, the above elastic member corresponds to a wave washer 31 in Examples, and the above regulating means corresponds to the cylindrical portion 30 of an idle gear 21 in Examples.

According to this first aspect, when the gear vibrates in the axial direction between the first and second fixed walls by load variation or the like during the operation of the gear transmission device, the vibration can be absorbed by the bending of the elastic member and when the gear is pressed toward the second fixed wall by a large thrust load, the regulating means regulates the bending amount of the elastic member to suppress the generation of its excessive resiliency, thereby making it possible to prevent the amplification of the vibration of an idle gear caused by the excessive resiliency and to improve the durability of the elastic member.

A further aspect is that the regulating means is constructed by providing a cylindrical portion surrounding the elastic member on one of the opposed end faces of the gear and the second fixed wall and contacting it to the other end face to regulate an increase of a predetermined value or more in the bending amount of the elastic member, in addition to the first feature.

According to this further aspect, the regulating means can be constructed with an extremely simple structure that the cylindrical portion is provided on one of the opposed end faces of the gear and the second fixed wall, thereby making it possible to provide an inexpensive vibration-proof structure for a gear transmission device.

A further aspect of is that the gear is an idle gear which is supported by a shaft between the first and second fixed walls in such a manner that it can slide and turn freely, in addition to the first and second features.

According to this further aspect, the vibration of the whole gear transmission device can be restrained by suppressing the vibration of the idle gear.

Preferred embodiments of the present invention will be described with reference to the accompanying drawings, in which:

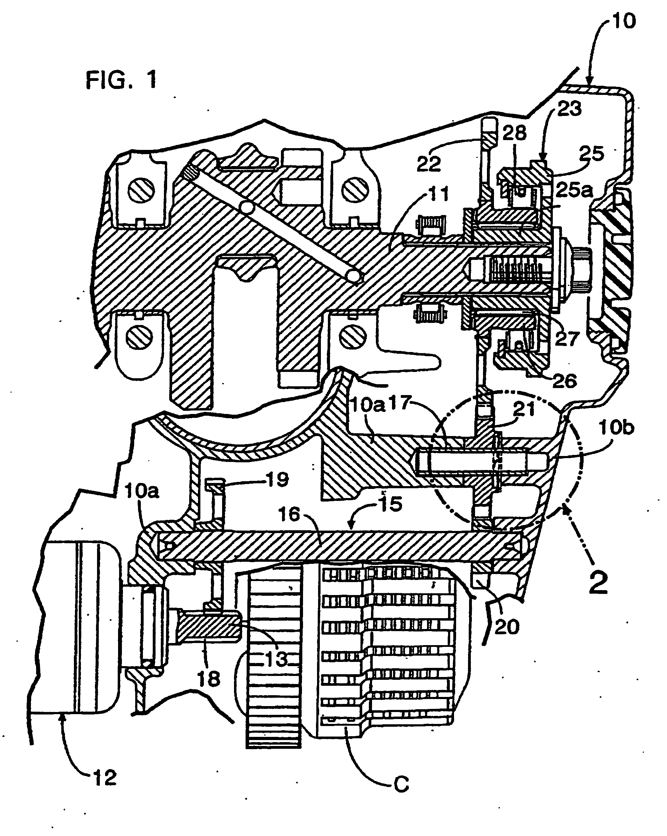

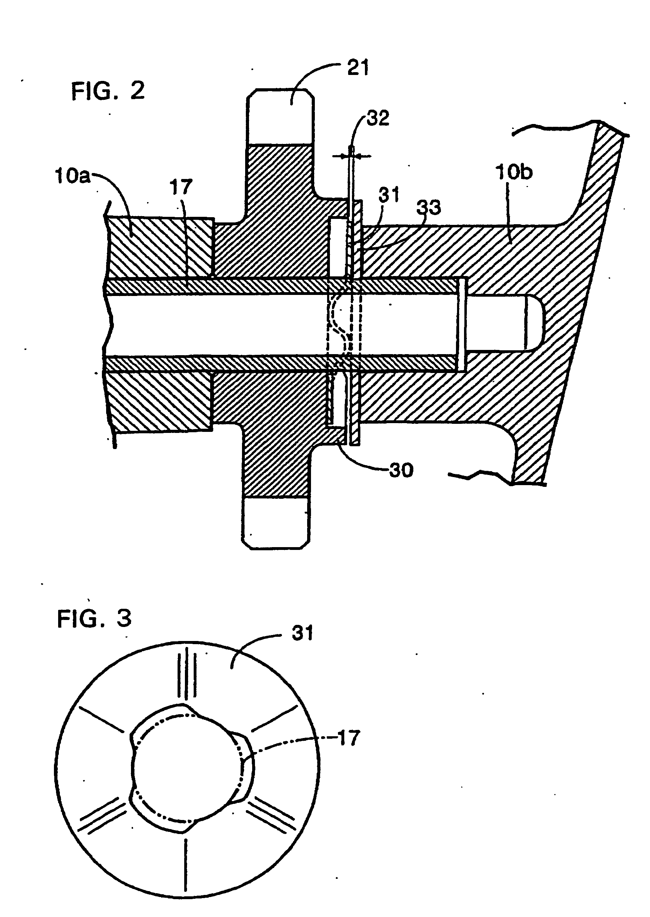

Fig. 1 is a longitudinal sectional view of a starting gear transmission device having a vibration-proof structure of the present invention. Fig. 2 is an enlarged view of the vibration-proof structure in the above starting gear transmission device, and Fig. 3 is a plan view of a wave washer in the vibration-proof structure.

In Fig. 1, reference numeral 10 denotes the engine body including a crank case of an engine for motorcycles. A crank shaft 11 is stored and supported in the body, and a starter motor 12 is mounted to the outer surface of the engine body 10 at a position corresponding to the center portion in an axial direction of the crank shaft 11 in such a manner that its output shaft 13 becomes parallel to the crank shaft 11. Imbalance in engine weight between right and left sides caused by the starter motor 12 is prevented by this arrangement of the starter motor 12.

The output shaft 13 of this starter motor 12 is linked to one end of the crank shaft 11 by the starting gear transmission device 15. The above starting gear transmission device 15 comprises a long first shaft 16 and a short second shaft 17 supported by the opposed first and second fixed walls 10a and 10b of the engine body 10 between the output shaft 13 of the starter motor 12 and the crank shaft 11. A large-diameter gear 19 engaged with a pinion 18 at the external end of the output shaft 13 is fitted onto one end side of the first shaft 16, and a small-diameter gear 20 engaged with an idle gear 21 having an intermediate diameter supported by the second shaft 17 rotatably is fitted onto the other end side of the first shaft 16.

The idle gear 21 is engaged with a ring gear 22 having the largest diameter fitted onto one end portion of the crank shaft 11 through an overrunning clutch 23. Therefore, at the start of the starter motor 12, the revolution of the output shaft 13 is decelerated in three stages by the pinion 18 and the large-diameter gear 19, the small-diameter gear 20 and the idle gear 21, and the idle gear 21 and the ring gear 22 and is transmitted to the crank shaft 11 through the overrunning clutch 23 to start the engine.

The overrunning clutch 23 normally comprises a clutch outer 25 having a hub 25a fitted onto one end portion of the crank shaft 11 by spline engagement, a clutch inner 26 rotatably supported by a needle bearing 27 around the hub 25a, and sprags 28, interposed between the clutch outer 25 and the clutch inner 26, for connecting the clutch outer 25 and the clutch inner 26 by standing up during the normal rotation of the clutch inner 26. The above ring gear 22 is welded to the clutch inner 26. Therefore, when the crank shaft 11 turns at a higher speed than the ring gear 22 along with the start of the engine, the sprags 28 fall to an inactivation position to cut off connection between the clutch outer 25 and the clutch inner 26.

A starting clutch C which is mounted to the input end portion of an unshown gearbox input shaft to be driven by the crank shaft 11 is situated on one side of the long first shaft 16 between the above large-diameter gear 19 and the small-diameter gear 20. Thus, it is possible to place the starting gear transmission device 15 and the starting clutch C in proximity to each other.

The vibration-proof structure of this starting gear transmission device 15 will be described with reference to Fig. 2 and Fig. 3.

The above idle gear 21 turns on the second shaft 17 and can slide in the axial direction between the first and second fixed walls 10a and 10b. A wave washer 31 which is wavy in a peripheral direction is interposed between one end face of the idle gear 21 and a plane washer 33 placed on the end face of the second fixed wall 10b to surround the second shaft 17. The wave washer 31 is compressed by a predetermined amount between the end face of the idle gear 21 and the plane washer 33 placed on the end face of the second fixed wall 10b, whereby a predetermined set load for pressing the idle gear 21 toward the first fixed wall 10a is applied.

A cylindrical portion 30 surrounding this wave washer 31 is integrated with one end face of the idle gear 21 and when the idle gear 21 is contacted to the first fixed wall 10a, a predetermined space 32 is formed between the cylindrical portion 30 and the plane washer 33 in contact with the second fixed wall 10b. This space 32 serves as the bending margin of the wave washer 31 so that the bending amount of the wave washer 31 is regulated by contact between the cylindrical portion 30 and the second fixing wall 10b through the plane washer 33.

When the idle gear 21 vibrates on the second shaft 17 in the axial direction by load variation or the like during the starting of the engine, that is, during the operation of the starting gear transmission device 15, this vibration can be absorbed by the elastic deformation of the wave washer 31 in the axial direction. In this case, when the idle gear 21 is pressed toward the second fixed wall 10b side by an excessive thrust load, the wave washer 31 is bent by a predetermined amount corresponding to the above space 32 and then the idle gear 21 brings the cylindrical portion 30 into contact with the second fixed wall 10b through the plane washer 33, whereby the bending amount of the wave washer 31 is regulated to retrain the generation of its excessive resiliency, thereby making it possible to prevent the amplification of the vibration of the idle gear 21 caused by the excessive resiliency. The suppression of the vibration of the above idle gear 21 can reduce the whole vibration of the starting gear transmission device 15. At the same time, the durability of the wave washer 31 can be improved.

In addition, the bending amount of the wave washer 31 can be regulated by an extremely simple structure that the cylindrical portion 30 for surrounding the wave washer 31 is provided on one end face of the idle gear 21 and a vibration-proof structure for the starting gear transmission device 15 can be provided at a low cost.

The present invention is not limited to the above embodiment and various design changes may be made without departing from the scope of the present invention. For example, the cylindrical portion 30 surrounding the wave washer 31 may be formed on the second fixed wall 10b.

According to the first feature of the present invention, in the vibration-proof structure of a gear transmission device in which an elastic member for pressing a gear of the gear transmission device which can move in an axial direction between opposed first and second fixed walls toward the first fixed wall is interposed between the gear and the second fixed wall of the gear transmission device, regulating means for regulating an increase of a predetermined value or more in the bending amount of the elastic member is provided between the above gear and the second fixed wall. Therefore, when the gear vibrates in the axial direction between the first and second fixed walls by load variation or the like during the operation of the gear transmission device, the vibration can be absorbed by the bending of the elastic member and when the gear is pressed toward the second fixed wall by an excessive thrust load, the regulating means regulates the bending amount of the elastic member to suppress the generation of its excessive resiliency, thereby making it possible to prevent the amplification of the vibration of the idle gear caused by the excessive resiliency and to improve the durability of the elastic member at the same time.

A cylindrical portion surrounding the elastic member is provided on one of the opposed end faces of the second fixed wall and the gear and is contacted to the other end face to regulate an increase of a predetermined value or more in the bending amount of the elastic member, thereby forming the regulating means, in addition to the first feature. Therefore, the above regulating means can be constructed with an extremely simple structure that the cylindrical portion is provided on one of the opposed end faces of the second fixed wall and the gear, thus making it possible to provide an inexpensive vibration-proof structure for a gear transmission device.

Further, since the gear is an idle gear which is supported by a shaft between the first and second fixed walls in such a manner that it can slide and turn freely, in addition to the first and second features, the vibration of the whole gear transmission device can be restrained by suppressing the vibration of the idle gear.

## Claims

1. A gear transmission device having a vibration-proof structure in which an elastic member (31) for pressing a gear (21) of a gear transmission device (15) which can move in an axial direction between opposed first and second fixed walls (10a, 10b) toward the first fixed wall (10a) is interposed between the gear (21) and the second fixed wall (10b), wherein
regulating means (30, 31) for regulating an increase of a predetermined value or more in the bending amount of the elastic member (31) is interposed between the gear (21) and the second fixed wall (10b),
**characterized in that**
the elastic member (31) has the form of a wave washer (31), and
**in that** the gear (21) is an idle gear which is supported by a shaft (17) between the first and second fixed walls (10a, 10b) in such a manner that it can slide or turn freely.

2. The gear transmission device according to claim 1, wherein the regulating means is constructed by providing a cylindrical portion (30) surrounding the wave washer (31) on one of the opposed end faces of the gear (21) and the second fixed wall (10b) and is contacted to the other end face to regulate an increase of a predetermined value or more in the bending amount of the wave washer (31).

3. The gear transmission device according to claim 2, wherein the cylindrical portion (30) is contacted to the other end face through a plane washer (33).

4. The gear transmission device according to claim 3, wherein, when the idle gear (21) is contacted to the first fixed wall (10a), a predetermined space (32) is formed between the cylindrical portion (30) and the plane washer (33) in contact with the second fixed wall (10b).

5. The gear transmission device according to claim 4, wherein the first fixed wall (10a) is integrated with a crankcase, the second fixed wall (10b) is integrated with another part of the engine body, and the idle gear (21) is interposed between the first fixed wall (10a) and the second fixed wall (10b).

## Patentansprüche

1. Zahnradgetriebeeinrichtung mit einer vibrationssicheren Struktur, bei der ein elastisches Element (31), um ein Zahnrad (21) einer Zahnradgetriebeeinrichtung (15), welches sich in einer Achsrichtung zwischen einander gegenüberliegenden ersten und zweiten festen Wänden (10a, 10b) bewegen kann, in Richtung der ersten festen Wand (10a) zu drücken, zwischen dem Zahnrad (21) und der zweiten festen Wand (10b) angeordnet ist, wobei
ein Einstellmittel (30, 31) zum Einstellen einer Zunahme des Biegebetrags des elastischen Elements (31) auf einen vorbestimmten oder höheren Wert zwischen dem Zahnrad (21) und der zweiten festen Wand (10b) angeordnet ist,
**dadurch gekennzeichnet,**
**dass** das elastische Element (31) die Form einer Wellenscheibe (31) hat, und
**dass** das Zahnrad (21) ein Zwischenrad ist, welches durch eine Welle (17) zwischen der ersten und der zweiten festen Wand (10a, 10b) derart gelagert ist, dass es frei gleiten oder drehen kann.

2. Zahnradgetriebeeinrichtung gemäß Anspruch 1, wobei das Einstellmittel aufgebaut ist, indem ein die Wellenscheibe (31) umgebender zylindrischer Abschnitt (30) an einer der entgegengesetzten Endflächen des Zahnrads (21) und der zweiten festen Wand (10b) vorgesehen ist und die andere Endfläche berührt, um eine Zunahme des Biegebetrags der Wellenscheibe (31) auf einen vorbestimmten oder höheren Wert einzustellen.

3. Zahnradgetriebeeinrichtung gemäß Anspruch 2, wobei der zylindrische Abschnitt 30 die andere Endfläche mittels einer ebenen Scheibe (33) berührt.

4. Zahnradgetriebeeinrichtung gemäß Anspruch 3, wobei dann, wenn das Zwischenrad (21) die erste feste Wand (10a) berührt, ein vorbestimmter Abstand (32) zwischen dem zylindrischen Abschnitt (30) und der die zweite feste Wand (10b) berührenden ebenen Scheibe (33) ausgebildet ist.

5. Zahnradgetriebeeinrichtung gemäß Anspruch 4, wobei die erste feste Wand (10a) mit einem Kurbelgehäuse integriert ist, die zweite feste Wand (10b) mit einem anderen Teil des Maschinenkörpers integriert ist und das Zwischenrad (21) zwischen der ersten festen Wand (10a) und der zweiten festen Wand (10b) angeordnet ist.

## Revendications

1. Dispositif de transmission à engrenages comprenant une structure anti-vibrations dans laquelle un élément élastique (31) destiné à pousser une roue dentée (21) d'un dispositif de transmission à engrenages (15) qui peut se déplacer dans une direction axiale entre une première et une seconde parois fixes opposées (10a, 10b) vers la première paroi fixe (10a) est disposé entre la roue dentée (21) et la seconde paroi fixe (10b), dans lequel :
des moyens de régulation (30, 31) destinés à réguler une augmentation égale ou supérieure à une valeur prédéterminée de la valeur de flexion de l'élément élastique (31) sont disposés entre la roue dentée (21) et la seconde paroi fixe (10b),
**caractérisé en ce que**,
l'élément élastique (31) a la forme d'une rondelle ondulée (31), et **en ce que** la roue dentée (21) est une roue dentée folle qui est supportée par un arbre (17) entre la première et la seconde paroi fixe (10a, 10b) de telle sorte qu'elle peut coulisser ou tourner librement.

2. Dispositif de transmission à engrenages selon la revendication 1, dans lequel les moyens de régulation sont construits en fournissant une partie cylindrique (30) qui entoure la rondelle ondulée (31) sur l'une des faces d'extrémité opposées de la roue dentée (21) et sur la seconde paroi fixe (10b) et est en contact avec l'autre face d'extrémité afin de réguler une augmentation d'une valeur égale ou supérieure prédéterminée de la valeur de flexion de la rondelle ondulée (31).

3. Dispositif de transmission à engrenages selon la revendication 2, dans lequel la partie cylindrique (30) est en contact avec l'autre face d'extrémité par l'intermédiaire d'une rondelle plate (33).

4. Dispositif de transmission à engrenages selon la revendication 3, dans lequel, lorsque la roue dentée folle (21) est en contact avec la première paroi fixe (10a), un espace prédéterminé (32) est formé entre la partie cylindrique (30) et la rondelle plate (33) en contact avec la seconde paroi fixe (10b).

5. Dispositif de transmission à engrenages selon la revendication 4, dans lequel la première paroi fixe (10a) est incorporée à un carter moteur, la seconde paroi fixe (10b) est incorporée à une autre partie du corps de moteur, et la roue dentée folle (21) est disposée entre la première paroi fixe (10a) et la seconde paroi fixe (10b).
